# EUROPÄISCHE PATENTSCHRIFT

(11) **EP 0 972 916 B1**
(45) Veröffentlichungstag und Bekanntmachung des Hinweises auf die Patenterteilung: **28.08.2002**
(21) Anmeldenummer: 99112928.9
(22) Anmeldetag: 05.07.1999
(51) Int. Cl.: F01P 5/10, B60T 1/087

(54) **Antriebseinrichtung in einem Kraftfahrzeug**
Drive system in a motor vehicle
Dispositif d'entraînement dans un véhicule à moteur

(30) Priorität: 16.07.1998 DE 19831922
(43) Veröffentlichungstag der Anmeldung: 19.01.2000
(73) Patentinhaber: MAN Nutzfahrzeuge Aktiengesellschaft, 80976 München (DE)
(72) Erfinder: Heim, Volker, Dipl.-Ing., 14913 Jüterbog (DE); Meyerhofer, Leopold, Dipl.-Ing., 85256 Rettenbach (DE); Rehm, Rudolf, 85250 Wollomoos (DE)

(56) Entgegenhaltungen:
- DE-A- 4 444 201
- DE-A- 19 603 184
- DE-C- 3 713 580

## Beschreibung

Die Erfindung betrifft eine Antriebseinrichtung in einem Kraftfahrzeug mit Merkmalen gemäß dem Oberbegriff des Anspruchs 1.

Die Erfindung geht aus von der EP 0707140 A1. Bei solchen Systemen, in denen das Kühlmittel der Brennkraftmaschine gleichzeitig als Arbeitsmittel für den Retarder fungiert, haben Erprobungen gezeigt, dass in bestimmten Arbeitsbereichen oder Betriebszuständen während des Retarderbetriebes im Kühlmittelkreislauf extrem hohe Druckspitzen auftreten, die zu Schäden z. B. im Kühler führen können. Eine Möglichkeit, diesem Problem abzuhelfen, besteht in der Auslegung des Kühlsystemes auf einen generell höheren Kühlmitteldruck. Dieses würde aber die Bauteile des Kühlmittelkreislaufes zum Teil erheblich verteuern, wobei insbesondere die druckfestere Auslegung des Kühlers maßgeblich wäre. Eine solche Verteuerung kann aber kaum in Kauf genommen werden.

Bei einer ähnlichen Antriebseinrichtung mit Retarder im Kühlkreislauf - siehe die DE 196 03 184 A1 - ist im Kühlkreislauf ein Rückschlagventil derart angeordnet, dass der Kühlmittelfluss über dieses Rückschlagventil geführt werden kann, wenn Betriebsdrücke im Leitungssystem des Kühlkreislaufs auftreten, die ausgeglichen werden müssen. Ein solcher Druckausgleich im geschlossenen Leitungssystem hilft dem Problem sehr hoher schlagartig auftretender Druckspitzen im Hinblick auf die Standfestigkeit des Kühlers jedoch nicht ab.

Es ist daher Aufgabe der Erfindung, eine Antriebseinrichtung der gattungsgemäßen Art so auszugestalten, dass das Problem unzulässig hoher Drücke im Kühlmittelkreislauf während des Retarderbetriebes beherrschbar ist.

Diese Aufgabe wird erfindungsgemäß durch die im Kennzeichen des Anspruch 1 angegebene Einrichtung gelöst.

Vorteilhafte Ausgestaltungen und Weiterbildungen dieser Lösung sind in den Unteransprüchen gekennzeichnet.

Das Vorsehen der erfindungsgemäßen Einrichtung mit ihrer Druckentlastungsleitung, dem Absperrventil und der Steuereinrichtung für die Absperrventil-Betätigung bringt den gewünschten Effekt mit vergleichsweise billigen Bauteilen. Jedenfalls kann auf diese erfindungsgemäße Weise vermieden werden, dass das Kühlsystem der Brennkraftmaschine auf höhere als an sich erforderliche Drücke ausgelegt werden muß und sich somit erheblich verteuern würde.

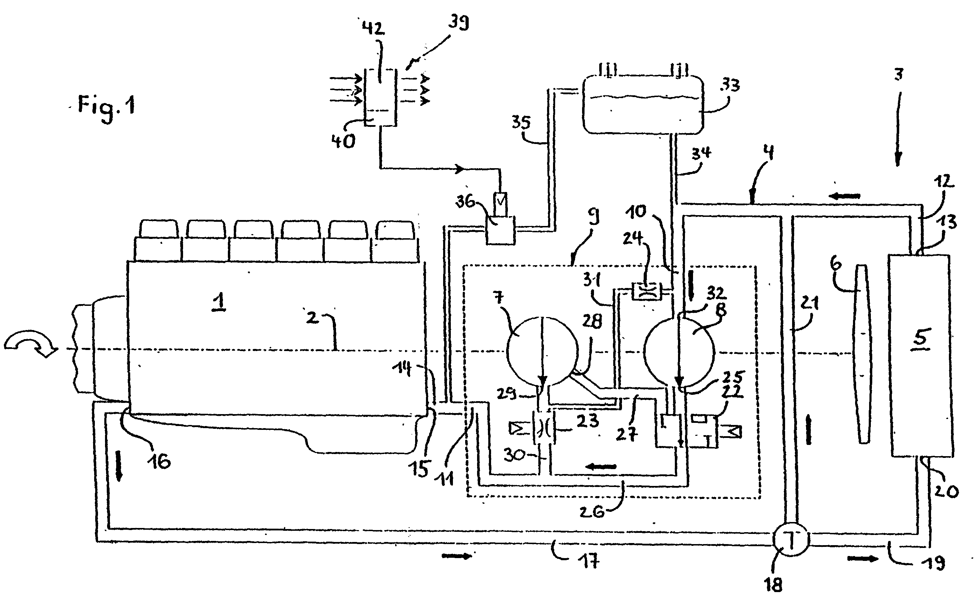

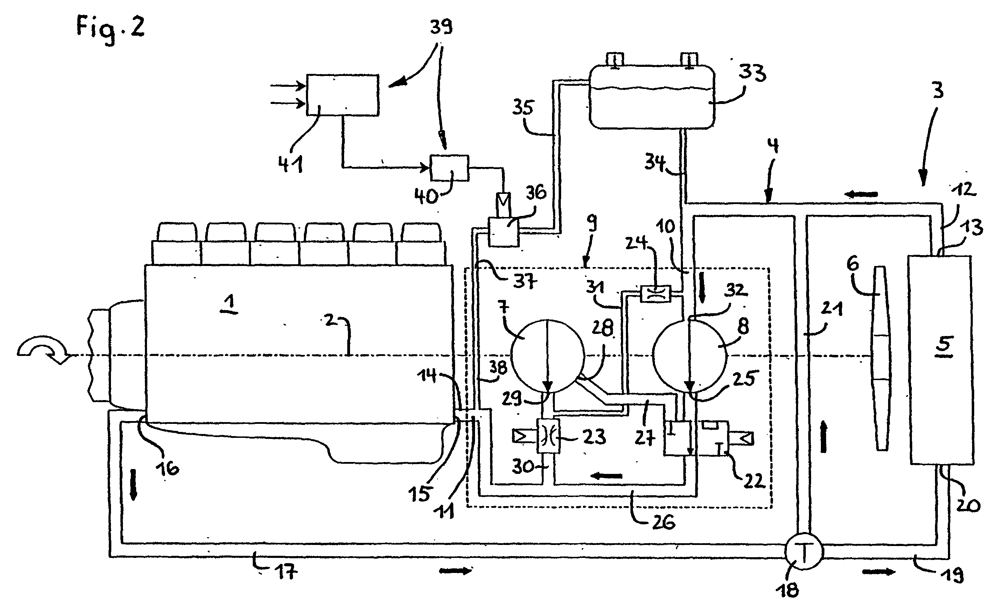

Nachstehend ist die erfindungsgemäße Lösung anhand zweier in der Zeichnung dargestellter Ausführungsbeispiele noch näher erläutert. Fig. 1 und 2 zeigen schematisch jeweils ein solches Ausführungsbeispiel.

In der Zeichnung ist mit 1 eine Brennkraftmaschine, mit 2 deren Kurbelwelle, mit 3 das Kühlsystem und mit 4 der Kühlmittelkreislauf derselben, mit 5 ein Kühler, mit 6 ein zugehöriger Lüfter, mit 7 ein hydrodynamischer Retarder und mit 8 eine Kühlmittelpumpe bezeichnet Der Retarder 7 weist einen Rotor, einen Stator (beide im einzelnen nicht dargestellt) und ein in der Zeichnung durch eine strich-punktierte Linie 9 angedeutetes Gehäuse auf. Die das Kühlmittel im Kühlmittelkreislauf 4 umwälzende Kühlmittelpumpe 8 und der Retarder 7 stehen in ständiger Triebverbindung mit der Brennkraftmaschine 1. Dabei kann der Rotor des Retarders 7 koaxial zur Kurbelwelle 2 angeordnet und direkt mit dieser gekuppelt sein. Die Kühlmittelpumpe 8 kann unabhängig vom Retarder 7, ein eigenständiges Bauteil bildend, von der Kurbelwelle 2 aus angetrieben sein. Alternativ hierzu kann die Kühlmittelpumpe 8 aber auch koaxial zum Retarder 7 angeordnet und mit diesem zu einer Baueinheit, einem sogenannten Wasserpumpenretarder, vereinigt sein, der von der Brennkraftmaschine 1 her angetrieben ist. Diese Version ist in den beiden Figuren 1 und 2 dargestellt, das Retarder-Gehäuse 9 umschließt dabei auch die integrierte Kühlmittelpumpe 8, es gibt nur einen Kühlmitteleingang 10 und einen Kühlmittelausgang 11 im gemeinsamen Retarder-Gehäuse 9. Arbeitsmittel für den Retarder 7 ist generell das im Kühlmittelkreislauf 4 umgewälzte Kühlmittel. Der Kühlmitteleingang 10 steht über eine Leitung 12 mit dem Ausgang 13 des Kühlers 5 und der Kühlmittelausgang 11 steht über einen Kanal 14 mit dem Kühlmitteleingang 15 der Brennkraftmaschine 1 in ständiger Verbindung. Deren Kühlmittelausgang 16 steht über eine Leitung 17 mit einem Thermostatventil 18 und dieses wiederum über eine Leitung 19 mit dem Eingang 20 des Kühlers 5 sowie über eine Bypassleitung 21 mit der Leitung 12 in Verbindung. Zur Beherrschung des Kühlmittelumwälzbetriebes und/oder Retarderbetriebes für Fahrzeugbremsen sind im Gehäuse 9 des (Wasserpumpen-) Retarders 7 ein 3/2-Wege-Schaltventil 22, ein Regelventil 23 und eine Leckagedrossel 24 vorgesehen. In seiner einen Schaltstellung für reinen Kühlmittelpumpenbetrieb, wie in Fig. 1 und 2 dargestellt, verbindet das 3/2-Wege-Schaltventil 22 den Kühlmittelpumpenausgang 25 direkt mit einem zum Retarderausgang 11 führenden Kanal 26. In seiner anderen Schaltstellung für Kühlmittelumwälz- und Retarderbetrieb verbindet das 3/2-Wege-Schaltventil 22 den Ausgang 25 der Kühlmittelpumpe 8 über einen Kanal 27 mit dem Eingang 28 des nun kühlmittelflußmäßig zur Kühlmittelpumpe 8 in Reihe geschalteten Retarders 7. Dessen Förderausgang 29 steht über einen Kanal 30 mit dem eingebauten Regelventil 23 mit dem Kanal 26 in Verbindung. Strömungsmäßig vor dem Regelventil 23 zweigt von dem Kanal 30 ein Leckagekanal 31 ab, in den die Leckagedrossel 24 eingebaut ist und der andemendes in den Eingang 32 der Kühlmittelpumpe 8 oder einen zwischen diesem und dem gehäuseseitigen Kühlmitteleingang 10 verlaufenden Kanal ausmündet

Mit 33 ist ein Kühlmittelausgleichsbehälter bezeichnet, der über eine Leitung 34 mit dem Kühlmittelkreislauf 4 kommuniziert.

Die Betätigung der beiden Ventile 22 und 23 des (Wasserpumpen-) Retarders 7 erfolgt auf der Basis ihnen zugeführter Schaltsignale, die von einer elektronischen Steuereinrichtung, wie dem Bordcomputer oder dem Führungsrechner des Fahrzeugs oder einem eigenständig dem (Wasserpumpen-) Retarder 7 zugeordneten Computer ausgegeben werden. Die Aktivierung des Retarders 7 für einen Fahrzeugbremsbetrieb erfolgt aufgrund entsprechender Befehle des Fahrers z. B. durch Betätigung eines Bremsschalters oder im Rahmen eines Bremsmanagements in Abhängigkeit von der Betätigung der Betriebsbremse, von welcher Betägigung ein Befehissignal abgeleitet wird, das in die elektronische Steuereinrichtung eingespeist wird.

Erfindungsgemäß ist einer solchen wie vorstehend beschriebenen oder ähnlichen Antriebseinrichtung in einem Kraftfahrzeug eine spezielle Einrichtung zugeordnet, die zum Abbau von durch den Retarderbetrieb im Kühlmittelkreislauf verursachten Druckspitzen dient. Solche Druckspitzen treten insbesondere beim Zu- und Abschalten oder abrupten Lastwechseln des Retarders 7 auf. Die erfindungsgemäße Einrichtung umfaßt eine Druckentlastungsleitung 35, die von einem zwischen dem Kühlmitteleingang 15 der Brennkraftmaschine 1 und dem Förderausgang 29 des Retarders 7 verlaufenden Kühlmittelkanal abzweigt und in den Kühlmittel-Ausgleichsbehälter 33 ausmündet, femer ein in die Druckentlastungsleitung 35 eingebautes, diese normalerweise abgesperrt haltendes, auf Durchlaß schaltbares Absperrventil 36 und eine Steuereinrichtung 39 für Betätigung des Absperrventils 36 bei Auftreten zu hoher Kühlmitteldrücke.

Die Druckentlastungsleitung 35 sollte möglichst nahe an der die Druckspitzen im Kühlmittel während des Fahrzeugbremsbetriebes erzeugenden Quelle, also dem Retarder 7, am Kühlmittelkreislauf 4 angeschlossen sein. Dieser Vorgabe gehorchend kann die Druckentlastungsleitung 35 beispielsweise extern des Retarders 7 von dem den Retarder-Ausgang 11 mit dem Kühlmitteleingang 15 der Brennkraftmaschine 1 verbindenden Kanal 14 (siehe Fig. 1) abzweigen oder an einem Hilfsausgang 37 des Retarder-Gehäuses 9 angeschlossen sein, der retardergehäuseintem über einen Kanal 38 beispielsweise mit dem Retarder-Ausgang 11 oder dem zu diesem hinführenden Kanal 26 (siehe Fig. 2) oder dem sich an den Förderausgang 29 anschließenden Kanal 30 verbunden ist.

Das Absperrventil 36 kann ebenfalls an verschiedenen Stellen angeordnet sein, beispielsweise entweder an das Gehäuse 9 des Retarders 7 an- oder in dieses, dort z. B. den Kanal 38, eingebaut sein, oder in den freien Abschnitt der Druckentlastungsleitung 35 eingebaut sein, oder an den Ausgleichsbehälter 33 an- oder in diesen eingebaut sein.

Die Steuereinrichtung 39 umfaßt einen dem Absperrventil 36 vorgeordneten Schaltmodul 40, dem für ein Schalten des Absperrventiles 36 ein elektronisch aufbereitetes bzw. erzeugtes Signal zugeführt wird und der dieses in ein die Betätigung des Absperrventiles 36 bewirkendes, z. B. elektro-pneumatisches oder elektro-hydraulisches oder elektro-magnetisches Signal umsetzt.

Die Steuereinrichtung 39 kann einen ausschließlich für Betätigung des Absperrventiles 36 dienenden Elektronikmodul 41 (siehe Fig. 2) aufweisen, der separat angeordnet oder mit dem Schaltmodul 40 zu einer Baueinheit vereinigt sein kann.

Die Steuereinrichtung kann aber auch einem Bordrechner oder Fahrzeugführungsrechner 42 oder einem sonstigen im Fahrzeug vorhandenen Computer aufgeprägt sein (siehe Fig. 1), der das die Betätigung des Absperrventiles 36 initiierende Signal erzeugt und an den Schaltmodul 40 ausgibt.

Bei normalem Fahrbetrieb und Motorbetrieb, also wenn kein Fahrzeugbremsvorgang abläuft und das Kühlmittel im Kühlkreislauf 4 von der Kühlmittelpumpe 8 alleine umgewälzt wird, ist die Druckentlastungsleitung 35 über das Absperrventil 36 abgesperrt. Während eines Fahrzeugbremsbetriebes jedoch, wenn der Retarder 7 aktiviert ist und dieser mit dem Kühlmittel als Arbeitsmittel aus dem Kühlmittelkreislauf 4 arbeitet, dann wird in Abhängigkeit von bestimmten erfaßten Betriebszuständen des Retarders 7, die zu unakzeptabel erhöhten Kühlmitteldrücken führen würden, insbesondere bei Ab- bzw. Ausschalten des Retarders 7, von der Steuereinrichtung 39 eine "auf-Durchlaß-Schaltung" der Druckentlastungsleitung 35 durch entsprechende Schaltung des Absperrventiles 36 ausgelöst. Die auftretenden Druckspitzen entspannen sich dadurch sofort in den Ausgleichsbehälter 33 hinein und können so im Kühlmittelkreislauf 4 keine nachteiligen Auswirkungen entfalten.

## Patentansprüche

1. Antriebseinrichtung in einem Kraftfahrzeug, insbesondere Lastkraftwagen oder Omnibus, mit einer Brennkraftmaschine (1) und einem Getriebe, ferner mit einem hydrodynamischen Retarder (7) für Fahrzeugbremsung, außerdem mit einem der Brennkraftmaschine zugeordneten Kühlsystem (3) mit Lüfter (6) und einem Kühler (5) in einem Kühlmittelkreislauf (4), in dem das Kühlmittel durch eine Kühlmittelpumpe (8) umgewälzt wird und zugleich das Arbeitsmittel für den Retarder (7) bildet, wobei
- der Retarder (7) und die Kühlmittelpumpe (8) sich in ständiger Triebverbindung mit der Brennkraftmaschine (1) befinden,
- der Retarder (7) einen Stator, einen Rotor und ein Gehäuse (9) aufweist,
- der Ausgang (11) des Retarders (7) mit dem Kühlmitteleingang (15) der Brennkraftmaschine (1) über einen Kanal (14) verbunden ist,
- der Kühlmittelkreislauf (4) mit einem Ausgleichsbehälter (33) in Verbindung steht,
**gekennzeichnet durch** eine Einrichtung zum Abbau von **durch** den Betrieb des Retarders (7) im Kühlmittelkreislauf (4) verursachten Druckspitzen, umfassend
- eine Druckentlastungsleitung (35), die von einem zwischen Kühlmitteleingang (15) der Brennkraftmaschine (1) und Förderausgang (29) des Retarders (7) verlaufenden Kühlmittelkanal (14, 26, 30) abzweigt und in den Ausgleichsbehälter (33) ausmündet,
- ein auf Durchlaß umschaltbares Absperrventil (36) in der Druckentlastungsleitung (35), und
- eine Steuereinrichtung (39) für die Betätigung des Absperrventiles (36).

2. Antriebseinrichtung nach Anspruch 1, **dadurch gekennzeichnet, daß** die Druckentlastungsleitung (35) extern des Retarders (7) von einem dessen Ausgang (11) mit dem Kühlmitteleingang (15) der Brennkraftmaschine (1) verbindenden Kanal (14) abzweigt.

3. Antriebseinrichtung nach Anspruch 1, **dadurch gekennzeichnet, daß** die Druckentlastungsleitung (35) von einem Anschluß (37) am Gehäuse (9) des Retarders (7) abzweigt, der gehäuse-intern mit dem Ausgang (11) oder einem zu diesem hinführenden Kanal (26) oder einem am Förderausgang (29) des Retärders (7) abgehenden Kanal (30) verbunden ist.

4. Antriebseinrichtung nach Anspruch 1, **dadurch gekennzeichnet, daß** das Absperrventil (36) entweder
- an das Gehäuse (9) des Retarders (7) angebaut, oder
- in das Gehäuse (9) des Retarders (7) eingebaut, oder
- in den freien Abschnitt der Druckentlastungsleitung (35) eingebaut, oder
- an den Kühlmittelausgleichsbehälter (33) angebaut, oder
- in den Kühlmittelausgleichsbehälter (33) eingebaut ist.

5. Antriebseinrichtung nach Anspruch 1, **dadurch gekennzeichnet, daß** die Steuereinrichtung (39) ein elektro-pneumatisches oder elektro-hydraulisches oder elektro-magnetisches Signal für Betätigung des Absperrventiles (36) initiiert.

6. Antriebseinrichtung nach Anspruch 1, **dadurch gekennzeichnet, daß** die Steuereinrichtung (39) einen Schaltmodul (40) umfaßt, dem für ein Schalten des Absperrventlles (36) ein elektronisch aufbereitetes bzw. erzeugtes Schaltsignal zugeführt wird und der dieses in ein die Betätigung des Absperrventiles (36) initiierendes elektro-pneumatisches oder elektro-hydraulisches oder elektro-magnetisches Signal umsetzt.

7. Antriebseinrichtung nach einem der Ansprüche 5 und 6, **dadurch gekennzeichnet, daß** das die Betätigung des Absperrventiles (36) initiierende Signal von einem Signal ausgelöst wird, daß von einem Bordrechner oder Führungsrechner (42) oder einem sonstigen im Fahrzeug vorhandenen Computer erzeugt und ausgegeben wird.

8. Antriebseinrichtung nach Anspruch 1, **dadurch gekennzeichnet, daß** die "auf-Durchlaß-Schaltung" der Druckentlastungsleitung (35) mittels des Absperrventils (36) in Abhängigkeit von bestimmten erfaßten Betriebszuständen des Retarders (7), insbesondere bei dessen Abschalten, erfolgt.

## Claims

1. Drive unit in a motor vehicle, particularly in a truck or bus/coach, with an internal combustion engine (1), a gearbox, a hydrodynamic retarder (7) for vehicle deceleration, a cooling system (3) allocated to the internal combustion engine with a fan (6) and a radiator (5) integrated in a coolant circuit (4) in which the coolant is recirculated by means of a coolant pump (8) and also constitutes the working agent for the retarder (7),
• the retarder (7) and the coolant pump (8) being in a constant drive connection with the internal combustion engine (1),
• the retarder (7) featuring a stator, a rotor and a housing (9)
• the outlet (11) of the retarder (7) being connected to the coolant inlet (15) of the internal combustion engine (1) via a duct (14),
• the coolant circuit (4) being connected with the expansion tank (33),
**characterised by** a device which is designed to reduce peak pressures occurring in the coolant circuit (4) during operation of the retarder (7) and consists of
• a pressure relief line (35) which branches off from a, coolant duct (14, 26, 30) running between the coolant inlet (15) of the internal combustion engine (1) and the delivery outlet (29) of the retarder (7) and enters the expansion tank (33),
• a shut-off valve (36) which is located in the pressure relief line (35) and can be changed over to passage mode and,
• a control unit (39) for actuating the shut-off valve (36).

2. Drive unit according to Claim 1, **characterised in that** outside the retarder (7) the pressure relief line (35) branches off from a duct (14) connecting the outlet (11) of said retarder (7) with the coolant inlet (15) of the internal combustion engine (1).

3. Drive unit according to Claim 1, **characterised in that** the pressure relief line (35) branches off from a connection point (37) on the housing (9) of the retarder (7), which connection point (37) is, on the inside of said housing (9), connected with the outlet (11) or with a duct (26) leading to said outlet (11) or with a duct (30) connected to the delivery outlet (29) of the retarder (7).

4. Drive unit according to Claim 1, **characterised in that** the shut-off valve (36) is either
• attached to the housing (9) of the retarder (7) or
• installed in the housing (9) of the retarder (7) or
• installed in the free section of the pressure relief line (35) or
• attached to the coolant expansion tank (33) or
• installed in the coolant expansion tank (33).

5. Drive unit according to Claim 1, **characterised in that** the control unit (39) initiates an electro-pneumatic or electro-hydraulic or electro-magnetic signal for actuating the shut-off valve (36).

6. Drive unit according to Claim 1, **characterised in that** the control unit (39) comprises a switching module (40) which is supplied with an electronically prepared or generated switching signal for switching the shut-off valve (36) and converts said switching signal into an electro-pneumatic or electro-hydraulic or electro-magnetic signal initiating the actuation of the shut-off valve (36).

7. Drive unit according to one of the Claims 5 and 6, **characterised in that** the signal initiating the actuation of the shut-off valve (36) is triggered by a signal generated and emitted by an on-board computer or by a vehicle management computer (42) or by some other computer installed on board the vehicle.

8. Drive unit according to Claim 1, **characterised in that** the passage mode of the pressure relief line (35) is engaged by means of the shut-off valve (36) as a function of certain recorded operating conditions of the retarder (7), particularly when said retarder (7) is in the process of shutting down.

## Revendications

1. Installation d'entraînement de véhicule automobile notamment de camions, d'autocars comportant un moteur à combustion interne (1) et une boîte de vitesses ainsi qu'un retardateur hydrodynamique (7) pour freiner le véhicule, et en plus un système de refroidissement (3) associé au moteur à combustion interne équipé d'un ventilateur (6) et d'un radiateur (5) dans le circuit de fluide de refroidissement (4), le fluide étant mis en circulation par une pompe de circulation (8) et constituant en même temps le fluide de travail du retardateur (7), installation dans laquelle,
- le retardateur (7) et la pompe de fluide de refroidissement (8) coopèrent en permanence avec le moteur à combustion interne (1),
- le retardateur (7) comporte un stator, un rotor et un boîtier (9),
- la sortie (11) du retardateur (7) est reliée à l'entrée de fluide de refroidissement (15) du moteur à combustion interne (1) par un canal (14),
- le circuit de fluide de refroidissement (4) communique avec un vase d'expansion (33),
**caractérisée par**
une installation pour éliminer les pointes de pression provoquées par le fonctionnement du retardateur (7) dans le circuit de fluide de refroidissement (4), cette installation comprenant
- une conduite de décharge de pression (35) qui dérive d'un canal de fluide de refroidissement (14, 26, 30) entre l'entrée de fluide de refroidissement (15) du moteur à combustion interne (1) et la sortie de refoulement (29) du retardateur (7), et qui débouche dans le vase d'expansion (33),
- une vanne d'arrêt (36) commutée pour s'ouvrir, cette vanne équipant la conduite de décharge de pression (35), et
- une installation de commande (39) pour l'actionnement de la vanne d'arrêt (36).

2. Installation d'entrainement selon la revendication 1,
**caractérisée en ce que**
la conduite de décharge de pression (35) dérive à l'extérieur du retardateur (7) à partir du canal (14) reliant la sortie (11) du retardateur à l'entrée de fluide de refroidissement (15) du moteur à combustion interne (1).

3. Installation d'entraînement selon la revendication 1,
**caractérisée en ce que**
la conduite de décharge de pression (35) dérive d'un branchement (37) du boîtier (9) du retardateur (7), en étant reliée à l'intérieur du boîtier à la sortie (11) ou à un canal (26) entrant dans celui-ci ou à un canal (30) sortant de la sortie de refoulement (29) du retardateur (7).

4. Installation d'entraînement selon la revendication 1,
**caractérisée en ce que**
la vanne d'arrêt (36) est :
- montée sur le boîtier (9) du retardateur (7) ou
- intégrée dans le boîtier (9) du retardateur (7) ou
- intégrée dans le segment libre de la conduite de décharge de pression (35) ou
- montée sur le vase d'expansion (33) ou
- intégrée dans le vase d'expansion (33).

5. Installation d'entraînement selon la revendication 1,
**caractérisée en ce que**
l'installation de commande (39) initialise un signal électropneumatique, électrohydraulique ou électromagnétique pour actionner la vanne d'arrêt (36).

6. Installation d'entraînement selon la revendication 1,
**caractérisée en ce que**
l'installation de commande (39) comporte un module de commutation (40) qui reçoit un signal de commutation généré ou préparé de manière électronique pour commuter la vanne d'arrêt (36), et le module convertit ce signal en un signal électropneumatique ou électrohydraulique ou électromagnétique pour initier l'actionnement de la vanne d'arrêt (36).

7. Installation d'entraînement selon l'une quelconque des revendications 5 ou 6,
**caractérisée en ce que**
le signal initialisant l'actionnement de la vanne d'arrêt (36) est déclenché par un signal fourni par un calculateur embarqué ou un calculateur de conduite (42) ou autres calculateurs équipant le véhicule.

8. Installation d'entraînement selon la revendication 1,
**caractérisée en ce que**
la position de passage de la conduite de décharge de pression (35) est commandée par la vanne d'arrêt (36) suivant certains états de fonctionnement détectés du retardateur (7), notamment lors de la coupure de celui-ci.
